(19)

Europäisches
Patentamt
European
Patent Office
Office européen
des brevets

(11) **EP 4 765 688 A1**

(12) **EUROPEAN PATENT APPLICATION**
published in accordance with Art. 153(4) EPC

(43) Date of publication:
**24.06.2026 Bulletin 2026/26**

(21) Application number: **23951955.6**

(22) Date of filing: **27.09.2023**

(51) International Patent Classification (IPC):
**H04J 3/06** (2006.01)

(86) International application number:
**PCT/CN2023/122310**

(87) International publication number:
**WO 2025/055028 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2023 CN 202311205496**

(71) Applicant: **Questyle Audio Technology Co., Ltd
Shenzhen, Guangdong 518000 (CN)**

(72) Inventor: **WANG, Fengshuo
Shenzhen, Guangdong 518000 (CN)**

(74) Representative: **Plavsa, Olga
Plavsa & Plavsa
Patentna kancelarija
Strumicka 51
11050 Beograd (RS)**

(54) **MULTI-CHANNEL DATA TRANSMISSION SYNCHRONIZATION METHOD AND SYNCHRONIZATION APPARATUS, AND DEVICE**

(57)      The invention provides a synchronization method, a synchronization device, and a transceiver device for multi-channel data transmission. The synchronization method transmits test data to N receiving devices, obtains a transmission cycle and N delayed playback timestamps based on the information fed back by the receiving devices, the data packet preparation time, a first time, and a predetermined error tolerance time; transmits audio data packets to the N receiving devices, obtains an existing data playback duration and a time difference based on the acknowledgment packets fed back by the receiving devices; adjusts the predetermined error tolerance time to a target error tolerance time according to the comparison result between the time difference and a predetermined time difference threshold. This achieves real-time and timely adjustment of the delayed playback time of audio data packets according to the actual situation of data transmission, thereby achieving the purpose of audio synchronization in multi-channel wireless transmission.

Sequentially transmitting test data packets to N receiving devices, and recording a first time required for completing the transmitting of all the test data packets, wherein N is a positive integer greater than 1 — S1

Obtaining a transmission cycle and N delayed playback timestamps based on a data packet preparation time, the first time, and a predetermined error tolerance time, wherein the N delayed playback timestamps are in one-to-one correspondence with the N receiving devices — S2

Respectively transmitting audio data packets and the corresponding delayed playback timestamps to the N receiving devices according to the transmission cycle, and thereafter receiving acknowledgment packets fed back by the receiving devices — S3

Obtaining an existing data playback duration based on the acknowledgment packets, and obtaining a time difference based on the delayed playback timestamps and the existing data playback duration — S4

Adjusting the predetermined error tolerance time to a target tolerance time according to a comparison result between the time difference and a predetermined time difference threshold — S5

FIG. 1

## Description

The invention is a Continuation of PCT Patent Application No. PCT/CN2023/122310 filed on September 27, 2023, which claims priority of China Patent Application No. 2023112054961 filed on September 15, 2023. The contents of the above-identified applications are incorporated herein by reference.

## TECHNICAL FIELD

The invention relates to the field of wireless communication technology, in particular, to a synchronization method and device for multi-channel data transmission, and a transceiver device using the same.

## BACKGROUND

With the advancement of wireless technology, wireless transmission methods such as WIFI and Bluetooth for transmitting audio have become increasingly mature. Users are free from constraints of wired connections and can enjoy diverse music anytime and anywhere, which bring greater flexibility and convenience to daily life and delivers an enhance auditory entertainment experience. Products adapted to various application scenarios, including Bluetooth headphones, Bluetooth speakers, WIFI speakers, have emerged on the market, and corresponding advancements have also been made in audio transmission technologies and audio processing algorithms.

In the prior art, when wireless transmission technologies are applied to transmission of multi-channel audio data packets, issues such as audio asynchrony and large latency arise.

Therefore, there remains room for improvement in the performance of wireless transmission of multi-channel data packets.

## SUMMARY

In view of the problems described above, the invention provides a synchronization method, a synchronization device, and a transceiver device for multi-channel data transmission, which is intended to address the existing issues of audio asynchrony and large latency in wireless transmission of multi-channel audio data.

In a first aspect, the invention provides a synchronization method for multi-channel data transmission, comprising the following steps:

> Sequentially transmitting test data packets to N receiving devices, and recording a first time required for completing the transmitting of all the test data packets, wherein N is a positive integer greater than 1;
> Obtaining a transmission cycle and N delayed playback timestamps based on a data packet preparation time, the first time, and a predetermined error tolerance time, wherein the N delayed playback timestamps are in one-to-one correspondence with the N receiving devices;
Respectively transmitting audio data packets and corresponding delayed playback timestamps to the N receiving devices according to the transmission cycle, and thereafter receiving acknowledgment packets fed back by the receiving devices;
Obtaining an existing data playback duration based on the acknowledgment packets, and obtaining a time difference based on the delayed playback timestamps and the existing data playback duration;

Adjusting the predetermined error tolerance time to a target error tolerance time according to a comparison result between the time difference and a predetermined time difference threshold.

In some embodiments, the step of recording the first time required for completing the transmitting of all the test data packets comprises:

> Recording a transmitting time of first data in the test data packets to obtain a first timestamp;
> Receiving a reception completion data packet fed back by the Nth receiving device;
> Determining a second timestamp according to the reception completion data packet;
> Performing a subtraction operation between the second timestamp and the first timestamp to obtain the first time.

In some embodiments, the step of obtaining the data packet preparation time comprises:

> Obtaining a third timestamp when the Nth receiving device starts receiving the test data packet and a fourth timestamp when the receiving device starts playing the test data packet based on the reception completion data packet;
> Performing a subtraction operation between the fourth timestamp and the third timestamp to obtain the data packet preparation time.

In some embodiments, the step of obtaining the transmission cycle and the N delayed playback timestamps based on the packet preparation time, the first time, and the predetermined error tolerance time comprises:

> Obtaining the transmission cycle based on the first time and the predetermined error tolerance time;
> Obtaining a first delayed playback timestamp based on the transmission cycle and the data packet preparation time;
> Obtaining an Nth delayed playback timestamp based on the first time and the first delayed playback timestamp, wherein N is a positive integer greater

3    **EP 4 765 688 A1**    4

than 1.

In some embodiments, the step of obtaining the transmission cycle based on the first time and the predetermined error tolerance time comprises:
Performing an addition operation between the first time and the predetermined error tolerant time to obtain the transmission cycle.

In some embodiments, the step of obtaining the first delayed playback timestamp based on the transmission cycle and the data packet preparation time comprises:
Performing a subtraction operation between the transmission cycle and the data packet preparation time to obtain the first delayed playback timestamp.

In some embodiments, the step of obtaining the Nth delayed playback timestamp based on the first time and the first delayed playback timestamp comprises:

When N is 2, performing a subtraction operation between the first time and the first delayed playback timestamp to obtain a second delayed playback timestamp;
When N is greater than 2, performing a subtraction operation between the first time and the (N-1)th delayed playback timestamp to obtain the Nth delayed playback timestamp.

In some embodiments, the step of obtaining the time difference based on the delayed playback timestamps and the existing data playback duration comprises:
Performing a subtraction operation between the delayed playback timestamps and the existing data playback duration to obtain a difference value, and performing an absolute value operation on the difference value to obtain the time difference.

In some embodiments, the step of adjusting the predetermined error tolerance time to a target error tolerance time according to a comparison result between the time difference and the predetermined time difference threshold comprises:

Comparing the time difference with the predetermined time difference threshold;
When the time difference is less than the predetermined time difference threshold, setting the target error tolerance time equal to the predetermined error tolerance time;
When the time difference is greater than or equal to the predetermined time difference threshold, adjusting the predetermined error tolerance time to the target error tolerance time.

In a second aspect, the invention also provides a synchronization device for multi-channel data transmission, comprising: a memory, configured to store program instructions; and a processor, configured to execute the program instructions to perform a synchronization method for multi-channel data transmission, wherein the synchronization method for multi-channel data transmission comprises:

Sequentially transmitting test data packets to N receiving devices, and recording a first time required for completing the transmitting of all the test data packets, wherein N is a positive integer greater than 1;
Obtaining a transmission cycle and N delayed playback timestamps based on a data packet preparation time, the first time, and a predetermined error tolerance time, wherein the N delayed playback timestamps are in one-to-one correspondence with the N receiving devices;
Respectively transmitting audio data packets and the corresponding delayed playback timestamps to the N receiving devices according to the transmission cycle, and thereafter receiving acknowledgment packets fed back by the receiving devices;
Obtaining an existing data playback duration based on the acknowledgment packets, and obtaining a time difference based on the delayed playback timestamps and the existing data playback duration;
Adjusting the predetermined error tolerance time to a target error tolerance time according to a comparison result between the time difference and a predetermined time difference threshold.

In some embodiments, the steps of obtaining the transmission cycle and the N delayed playback timestamps based on the data packet preparation time, the first time, and the predetermined error tolerance time comprise:

Obtaining the transmission cycle based on the first time and the predetermined error tolerance time;
Obtaining a first delayed playback timestamp based on the transmission cycle and the data packet preparation time;
Obtaining an Nth delayed playback timestamp based on the first time and the first delayed playback timestamp, wherein N is a positive integer greater than 1.

In a third aspect, the invention also provides a transceiver device, comprising a transmitting device and a receiving device, wherein the transmitting device and the receiving device are in communication connection through wireless transmission, and the transmitting device or the receiving device comprises the synchronization device.

The synchronization method for multi-channel data transmission of the invention records the first time required for completing the transmitting of all test data packets; obtains the transmission cycle and N delayed playback timestamps based on the data packet preparation time, the first time, and the predetermined error tolerance time; transmits the audio data packets and the corresponding delayed playback timestamps to the N receiving devices respectively according to the transmission cycle; obtains the existing data playback duration based on acknowledgment packets, and obtains the time difference based on the delayed playback timestamps and the existing data playback duration; adjusts the predetermined error tolerance time to a target error tolerance time based on the comparison result between the time difference and a predetermined time difference threshold.

The invention transmits the test data packets to the N receiving devices, and calculates the transmission cycle and the N delayed playback timestamps based on the data packet preparation time, the first time, and the predetermined error tolerance time. The invention then transmits audio data packets and the corresponding delayed playback timestamps to the N receiving devices, and calculates and obtains the existing data playback duration and the time difference based on acknowledgment packets (ACKs) fed back by the receiving devices. Finally, the invention adjusts the predetermined error tolerance time to a target error tolerance time based on a comparison result between the time difference and a predetermined time difference threshold. In this way, real-time and timely adjustment of playback delay time of audio data packets during multi-channel wireless transmission is realized according to an actual data transmission condition, that is, the predetermined error tolerance time is adjusted to the target error tolerance time, so as to achieve audio synchronization for multi-channel wireless transmission.

## BRIEF DESCRIPTION OF THE DRAWINGS

To more clearly illustrate the technical solutions in the embodiments of the invention, the accompanying drawings used in the description of the embodiments are briefly introduced below. It is obvious that the accompanying drawings in the following description are merely some embodiments of the invention, and those skilled in the art can obtain other accompanying drawings from these accompanying drawings without creative efforts.

FIG. 1 is a first schematic flowchart of a synchronization method for multi-channel data transmission according to an embodiment of the invention;
FIG. 2 is a second schematic flowchart of the synchronization method for multi-channel data transmission according to an embodiment of the invention;
FIG. 3 is a schematic flowchart of obtaining a transmission cycle and delayed playback timestamps according to an embodiment of the invention;
FIG. 4 is a third schematic flowchart of the synchronization method for multi-channel data transmission according to an embodiment of the invention;

FIG. 5 is a schematic structural diagram of a synchronization device for multi-channel data transmission according to an embodiment of the invention.

## DETAILED DESCRIPTION OF THE EMBODIMENTS

The technical solutions in the embodiments of the invention will be clearly and completely described below with reference to the accompanying drawings in the embodiments of the invention. It is apparent that the described embodiments are merely some rather than all of the embodiments of the invention. All other embodiments obtained by those skilled in the art based on the embodiments of the invention without creative efforts shall fall within the protection scope of the invention.

It should be noted that when an element is referred to as being "fixed to" or "disposed on" another element, it can be directly fixed or disposed on the other element, or indirectly fixed or disposed on the other element via an intervening element. When an element is referred to as being "connected to" another element, it can be directly connected to the other element or indirectly connected to the other element via an intervening element. Furthermore, the connection may be configured for both mechanical fixation and electrical connection.

It should be understood that the orientations or positional relationships indicated by terms such as "length," "width," "upper," "lower," "front," "rear," "left," "right," "vertical," "horizontal," "top," "bottom," "inner," "outer," and the like are based on the orientations or positional relationships shown in the accompanying drawings. These terms are used merely for convenience in describing embodiments of the invention and for simplifying the description, rather than indicating or implying that the device or elements referred to must have a specific orientation or be constructed and operated in a specific orientation. Therefore, these terms should not be construed as limiting the invention.

Furthermore, terms such as "first," "second," and the like are used herein for descriptive purposes only, and shall not be construed as indicating or implying relative importance or implicitly delimiting the number of indicated technical features. Accordingly, features defined with "first," "second," and the like may expressly or implicitly include one or more of such features. In the description of the embodiments of the invention, the term "multiple" means two or more, unless specifically and clearly defined otherwise.

The following description of the embodiments is intended to facilitate the public's understanding of the invention, but the specific embodiments provided herein shall not be construed as limiting the technical solutions of the invention or defining any components or technical features thereof.

The embodiments of the invention provide a synchronization method, a synchronization device, and a transceiver device for multi-channel data transmission.

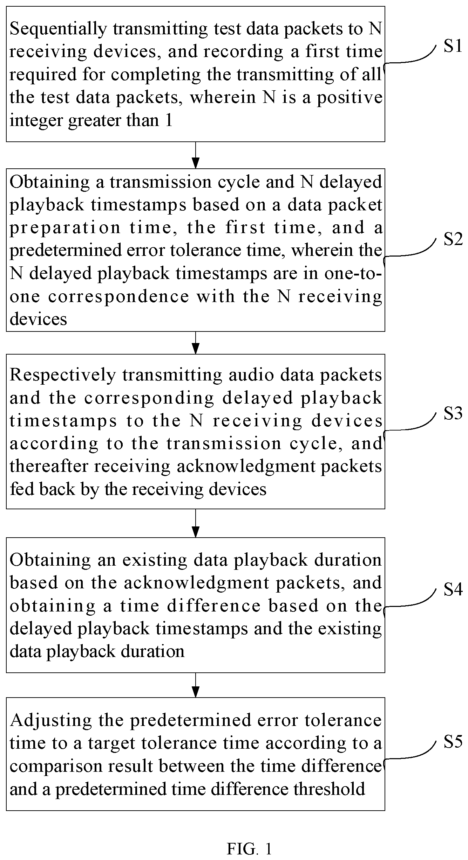

Referring to FIG. 1, a synchronization method for multi-channel data transmission provided by this embodiment includes the following steps:

S1: sequentially transmitting test data packets to N receiving devices, and recording a first time required for completing the transmitting of all the test data packets, wherein N is a positive integer greater than 1.

S2: obtaining a transmission cycle and N delayed playback timestamps based on a data packet preparation time, the first time, and a predetermined error tolerance time wherein the N delayed playback timestamps are in one-to-one correspondence with the N receiving devices.

S3: respectively transmitting audio data packets and the corresponding delayed playback timestamps to the N receiving devices according to the transmission cycle, and thereafter receiving acknowledgment packets fed back by the receiving devices.

S4: obtaining an existing data playback duration based on the acknowledgment packets, and obtaining a time difference based on the delayed playback timestamps and the existing data playback duration.

S5: adjusting the predetermined error tolerance time to a target tolerance time according to a comparison result between the time difference and a predetermined time difference threshold.

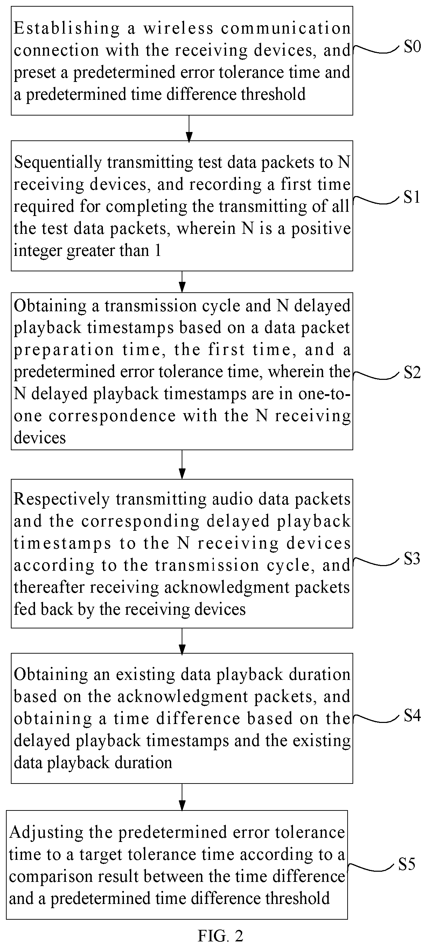

Referring to FIG. 2, in some embodiments, before performing step S1, the synchronization method for multi-channel data transmission of the invention further includes step S0: establishing a wireless communication connection with the receiving devices, and preset a predetermined error tolerance time and a predetermined time difference threshold.

In some embodiments, the predetermined error tolerance time and the predetermined time difference threshold may be set or adjusted according to the actual condition or requirements of audio data packet transmission.

In some embodiments, the predetermined time difference threshold is the minimum allowable asynchrony duration for audio data packet transmission and playback. In some embodiments, the predetermined time difference threshold can be set to 2 ms.

In some embodiments, in step S0, the step of establishing a wireless communication connection with the receiving devices includes:

S01: the transmitting device and the receiving devices establish wireless transmission tasks and wireless reception tasks;

S02: the transmitting device switches to a transmission state, and transmits pairing request information to the receiving devices;

S03: the receiving devices switch to a reception state to obtain the pairing request information. After confirming receipt of the pairing request information, the receiving devices switch to the transmission state and transmit pairing information to the transmitting device;

The steps S02 and S03 are repeated until all receiving devices have transmitted pairing information to the transmitting device;

S04: the transmitting device switches to the reception state and receives the pairing information. Based on the pairing information, the transmitting device checks whether a device model of the receiving device matches a default device model for wireless communication connection preset in the system;

If they match, the pairing between the transmitting device and the receiving devices is completed;

If they do not match, return to step S02;

The step S04 is repeated until all receiving devices have been paired with the transmitting device. The receiving devices then enter the reception state and are ready to receive data transmitted by the transmitting device.

In some embodiments, the transmitting device and the receiving devices perform wireless communication via Ultra Wide Band (UWB). That is, the transmitting device and the receiving devices are each provided with a UWB transmitting module and a UWB receiving module to transmit and receive audio data packets or acknowledgment packets via UWB communication.

In some embodiments of the invention, in step S1, the step of recording the first time required for completing the transmitting of all the test data packets includes:

S11: recording a transmitting time of first data in the test data packets to obtain a first timestamp;

S12: receiving an acknowledgment packet fed back by the Nth receiving device;

S13: determining a second timestamp according to the acknowledgment packets;

S14: performing a subtraction operation between the second timestamp and the first timestamp to obtain the first time.

In some embodiments, the calculation formula for the first time is as follows:

$$T_0 = T_{12} - T_{11}.$$

Wherein $T_0$ represents the first time, $T_{11}$ represents the first timestamp, and $T_{12}$ represents the second timestamp.

In some embodiments, in step S1, the step of sequentially transmitting test data packets to N receiving devices includes:

The transmitting device switches to the transmission state and sequentially transmits the maximum data packets to the N receiving devices. After transmitting all maximum data packets to all receiving devices, the transmitting device switches to the reception state; it should be noted that the test data packets include a maximum data packet, which refer to a data length before compression (i.e., the data length when uncompressed) and correspond to an actual length of the data played by the receiving devices. After pairing with the transmitting device, the receiving devices enter the reception state. Upon receiving the maximum data packets, the receiving devices generate the acknowledgment packets and, after switching to the transmission state, transmit the acknowledgment packets to the transmitting device; After receiving the acknowledgment packets from the N receiving devices, the transmitting device calculates the total time $T_0$ for transmitting data to the N receiving devices based on the acknowledgment packets. It should be noted that $T_0$ corresponds to the first time in steps S1 and S2 described above.

In some embodiments of the invention, in step S2, the step of obtaining the data packet preparation time includes:

Obtaining a third timestamp when the receiving device starts receiving the data packet and a fourth timestamp when the receiving device starts playing the data packet based on the reception completion data packet;

Performing a subtraction operation between the fourth timestamp and the third timestamp to obtain the data packet preparation time.

In some embodiments, the calculation formula for the data packet preparation time is:

$$T_{prepare} = T_{24} - T_{23},$$

Wherein, $T_{prepare}$ represents the data packet preparation time, i.e., the delay time from when the receiving device receives the data packet to when the receiving device plays the data packet. $T_{prepare}$ also corresponds to the delayed playback timestamp attached to the data packet and serves as a reference time for playback synchronization detection. $T_{23}$ represents the third timestamp, and $T_{24}$ represents the fourth timestamp.

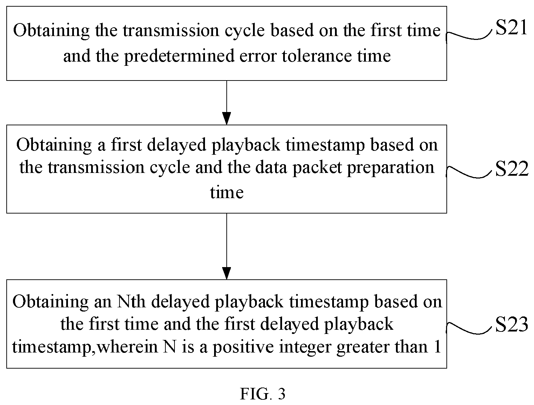

Referring to FIG. 3, in some embodiments of the invention, in step S2, the step of obtaining the transmission cycle and the N delayed playback timestamps based on the data packet preparation time, the first time, and the predetermined error tolerance time includes:

S21: obtaining the transmission cycle based on the first time and the predetermined error tolerance time;
S22: obtaining a first delayed playback timestamp based on the transmission cycle and the data packet preparation time;
S23: obtaining an Nth delayed playback timestamp based on the first time and the first delayed playback timestamp, wherein N is a positive integer greater than 1.

In some embodiments of the invention, in step S21, the step of obtaining the transmission cycle based on the first time and the predetermined error tolerance time includes:

Performing an addition operation between the first time and the predetermined error tolerance time to obtain the transmission cycle.

In some embodiments, the calculation formula for the transmission cycle is as follows:

$$T_t = T_0 + T_{delay1}.$$

Wherein $T_t$ represents the transmission cycle, which also corresponds a standard transmission cycle matched between the transmitting device and the receiving devices. $T_0$ is the first time, and $T_{delay1}$ is the predetermined error tolerance time.

**In** some embodiments of the invention, in step S22, the step of obtaining the first delayed playback timestamp based on the transmission cycle and the data packet preparation time includes:

Performing a subtraction operation between the transmission cycle and the data packet preparation time to obtain the first delayed playback timestamp.

**In** some embodiments, the calculation formula for the first delayed playback timestamp is as follows:

$$T_1 = T_t - T_{prepare}.$$

Wherein $T_1$ is the first delayed playback timestamp, $T_t$ is the transmission cycle, and $T_{prepare}$ is the data packet preparation time, which is the delay time from when the receiving device receives the data packet to when it plays the data packet. It is also the delayed playback timestamp attached to the data packet and the reference time for playback synchronization detection.

In some embodiments of the invention, in step S23, the step of obtaining the Nth delayed playback timestamp based on the first time and the first delayed playback timestamp includes:

When N is 2, performing a subtraction operation between the first time and the first delayed playback timestamp to obtain a second delayed playback timestamp;
When N is greater than 2, performing a subtraction operation between the first time and the (N-1)th delayed playback timestamp to obtain the Nth delayed playback timestamp.

In some embodiments, the calculation formula for the Nth delayed playback timestamp is as follows:

When N = 2, $T_2 = T_0 - T_1$;
When N > 2, $T_n = T_0 - T_{n-1}$.

Wherein, $T_1$ represents the first delayed playback timestamp, $T_2$ represents the second delayed playback timestamp, $T_n$ represents the Nth delayed playback timestamp, $T_{n-1}$ represents the (N-1)th delayed playback timestamp, and $T_0$ represents the first time.

In some embodiments, the first receiving device $RX_1$, the second receiving device $RX_2$, ..., the (N-1)th receiving device $RX_{n-1}$, and the Nth receiving device $RX_n$ sequentially use $T_1, T_2, ..., T_{n-1}$, and $T_n$ as their respective delayed playback timestamps.

In some embodiments, in step S3, the step of transmitting the audio data packets and corresponding delayed playback timestamps to the N receiving devices respectively according to the transmission cycle:

The transmitting device sequentially transmits audio data packets and corresponding delayed playback timestamps to the N receiving devices using the transmission cycle as a standard data transmission period, specifically including:

Transmitting audio data packets and $T_1$ to the first receiving device $RX_1$, transmitting audio data packets and $T_2$ to the second receiving device $RX_2$, ..., until transmitting audio data packets and $T_n$ to the Nth receiving device $RX_n$.

In some embodiments, the step of receiving the acknowledgment packets fed back by the receiving devices after transmitting audio data packets and corresponding delayed playback timestamps to the N receiving devices respectively in step S3 includes:

S31: the transmitting device switches to the transmission state, sequentially transmits audio data packets to the N receiving devices, and sequentially transmits $T_1, T_2, ..., T_{n-1}, T_n$ as respective delayed playback timestamps along with the audio data packets to the first receiving device $RX_1$, the second receiving device $RX_2$, ..., the (N-1)th receiving device $RX_{n-1}$, and the Nth receiving device $RX_n$;

Wherein $T_n$ represents the Nth delayed playback timestamp of the audio data packet received by the Nth receiving device $RX_n$, and also corresponds to the delayed playback timestamp attached to the received audio data packet and the reference time for playback synchronization detection.

S32: the receiving devices switch to the reception state. After receiving the audio data packets and the delayed playback timestamps $T_1, T_2, ..., T_{n-1}, T_n$, the receiving devices determine whether the received audio data and delayed playback timestamps are normal; if abnormal, the receiving devices continue detecting the received data until the audio data packets and the delayed playback timestamps are normal; if normal, the receiving devices switch to the transmission state and transmit the acknowledgment packets to the transmitting device;

S33: The transmitting device switches to the reception state and receives the acknowledgment packets fed back by the receiving devices;

S34: steps S32 to S33 are repeated until the transmitting devices receive the acknowledgment packets fed back by all the receiving devices, indicating that all audio data has been transmitted.

In some embodiments of the invention, in step S4, the step of obtaining the time difference according to the delayed playback timestamp and the existing data playback duration includes:

Performing a subtraction operation between the delayed playback timestamps and the existing data playback duration to obtain a difference value, and performing an absolute value operation on the difference value to obtain the time difference.

In some embodiments, the calculation formula for the time difference in step S4 is as follows:

$$T_d = |T_p - T_n|.$$

Wherein $T_p$ represents the existing data playback duration, that is, the duration required to play back all audio data in the Nth receiving device, $T_n$ represents the Nth delayed playback timestamp, $T_p - T_n$ represents the difference value between the existing data playback duration and Nth delayed playback timestamp, and $T_d$ represents the time difference.

In some embodiments of the invention, in step S5, the step of adjusting the predetermined error tolerance time to a target error tolerance time according to the comparison result between the time difference and the predetermined time difference threshold includes:

Comparing the time difference with the predetermined time difference threshold;
When the time difference is less than the predetermined time difference threshold, setting the target error tolerance time equal to the predetermined error tolerance time;
When the time difference is greater than or equal to the predetermined time difference threshold, adjusting a magnitude of the predetermined error tolerance time to the target error tolerance time.

In some embodiments, the step S5 includes the following steps:

When $T_d < T_s$, wherein $T_s$ represents the predetermined time difference threshold, no adjustment to the predetermined error tolerance time is needed, that is, the target error tolerance time $T_{delay2}$ is equal to the predetermined error tolerance time, $T_{delay2} = T_{delay1}$.

In some embodiments, the predetermined time difference threshold $T_s$ may be set to 2 ms.

In other embodiments, the step S5 includes the following steps:

When $T_d \geq T_s$, the predetermined error tolerance time needs to be adjusted. The magnitudes of the existing data playback duration and the Nth delayed playback timestamp are determined, with the specific steps as follows:

According to the above formulas:

$$T_n = T_0 - T_{n-1}$$

$$T_t = T_0 + T_{delay1}$$

$$T_1 = T_t - T_{prepare}$$

A relationship formula between the Nth delayed playback timestamp and the predetermined error tolerance time is obtained:

When $N = 2$, $T_2 = T_{prepare} - T_{delay1}$; or,
When $N > 2$, $T_n = T_t - T_{delay1}$

In summary, the value of $T_n$ is inversely proportional to the value of $T_{delay1}$.

Therefore, when $T_p < T_n$, the predetermined error tolerance time $T_{delay1}$ is increased to obtain the target error tolerance time $T_{delay2}$. The predetermined error tolerance time is replaced with the targe error tolerance time to reduce the size of $T_n$, such that the time difference between $T_n$ and $T_p$ is less than the predetermined time difference threshold $T_s$;

When $T_p > T_n$, the predetermined error tolerance time $T_{delay1}$ is decreased to obtain the target error tolerance time $T_{delay2}$. The predetermined error tolerance time is replaced with the target error tolerance time to increase the value of $T_n$, such that the time difference between $T_n$ and $T_p$ is less than the predetermined time difference threshold $T_s$.

In some embodiments, the delayed playback timestamps of each receiving device are calculated sequentially to obtain corresponding time differences, and whether the delayed playback timestamps of the receiving devices need to be adjusted is determined according to a comparison result between the time differences and the predetermined time difference threshold, that is:

When the time difference of the receiving device is less than the predetermined time difference threshold, adjustment of its delayed playback timestamp of the receiving device is unnecessary;
When the time difference of the receiving device is greater than the predetermined time difference threshold, its delayed playback timestamp needs to be adjusted;
The delayed playback timestamps of all receiving devices requiring adjustment are comprehensively adjusted by adjusting the predetermined error tolerance time to obtain the target error tolerance time, thereby achieving dynamic adjustment of the delayed playback timestamps of the receiving devices and improving the synchronization rate of multi-channel wireless data transmission.

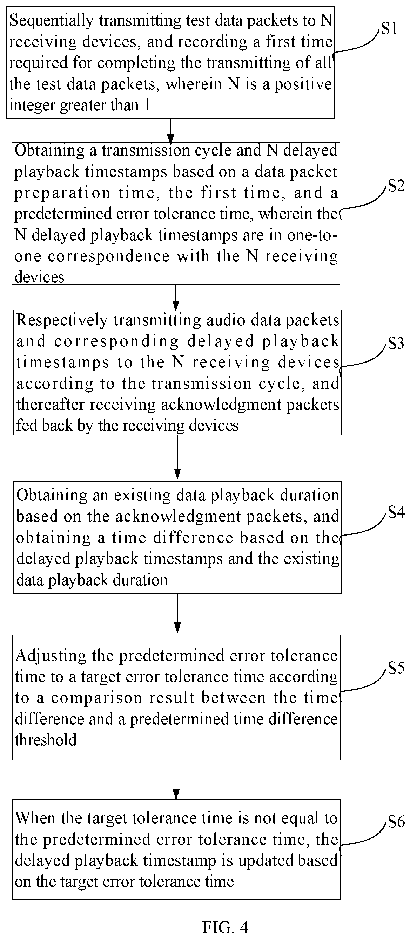

Referring to FIG. 4, in some embodiments of the invention, after performing step S5, the synchronization method for multi-channel data transmission of the invention further performs step S6:

When the target tolerance time is not equal to the predetermined error tolerance time, the delayed playback timestamp is updated based on the target error tolerance time.

In some specific embodiments, steps S5 and S6 further include:

When an internal time difference of the receiving device is less than the predetermined time difference threshold, the delayed playback timestamp of the receiving device is maintained;
When the internal time difference of the receiving device is greater than or equal to the predetermined time difference threshold, the predetermined error tolerance time of the receiving device is adjusted to obtain the target error tolerance time. The receiving device transmits the update information to the transmitting device, and the transmitting device updates the delayed playback timestamp of the receiving device according to the target error tolerance time, thereby improving the audio playback synchronization rate of multiple receiving devices.

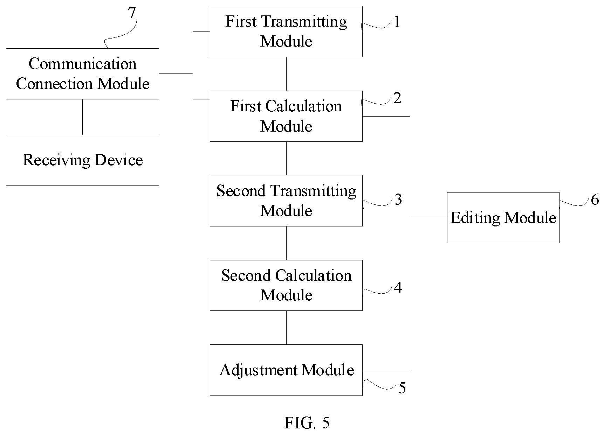

Referring to FIG. 5, the invention also provides a synchronization device for multi-channel data transmission, the synchronization device includes a first transmitting module 1, a first calculation module 2, a second transmitting module 3, a second calculation module 4, and an adjustment module 5.

The first transmitting module 1, is configured to sequentially transmit test data packets to N receiving devices and recording the first time required for completing the transmitting of all the test data packets, wherein N is a positive integer greater than 1;
The first calculation module 2, is configured to obtain the transmission cycle and N delayed playback timestamps according to the data packet preparation time, the first time, and the predetermined error tolerance time. The N delayed playback timestamps correspond to the N receiving devices one-to-one;
The second transmitting module 3, is configured to respectively transmit audio data packets and the corresponding delayed playback timestamps to the N receiving devices according to the transmission cycle, and thereafter receive acknowledgment packets fed back by the receiving devices;
The second calculation module 4, is configured to obtain an existing data playback duration based on the acknowledgment packets, and obtain a time difference based on the delayed playback timestamps and the existing data playback duration;
The adjustment module 5, is configured to adjust the predetermined error tolerance time to a target error tolerance time according to a comparison result between the time difference and a predetermined time difference threshold.

In some embodiments, the first transmitting module 1 and the second transmitting module 3 can be a single transmitting module or two distinct transmitting modules. The transmitting module can transmit one or more of test data packets, audio data packets, and delayed playback timestamps.

Referring to FIG. 5, in some embodiments, the synchronization device of the invention further includes a communication connection module 7 and an editing module 6.

The communication connection module 7 is configured to establish a wireless communication connection with the receiving devices; the communication connection module 7 is connected to the first transmitting module 1 and the second transmitting module 3, configured to implement a communication connection between the first transmitting module 1 and the receiving devices, as well as a communication connection between the second transmitting module 3 and the receiving devices; An editing module 6, is configured connected to the first calculation module 2 and the adjustment module 5, configured to preset the predetermined error tolerance time and the predetermined time difference threshold and transmit the predetermined error tolerance time and the predetermined time difference threshold to the first calculation module 2 and the adjustment module 5.

In some embodiments, the steps of the communication connection module 7 establishing a wireless communication connection with the receiving devices include:

S01: the transmitting device and the receiving devices establish wireless transmission tasks and wireless reception tasks;
S02: the transmitting device switches to a transmission state, and transmits pairing request information to the receiving devices;
S03: the receiving devices switch to a reception state to obtain the pairing request information. After confirming receipt of the pairing request information, the receiving devices switch to the transmission state and transmit pairing information to the transmitting device;
The steps S02 and S03 are repeated until all receiving devices have transmitted the pairing information to the transmitting device.
S04: the transmitting device switches to the reception state and receives the pairing information. Based on the pairing information, the transmitting device checks whether a device model of the receiving device matches a default device model for wireless communication connection preset in the system;
If they match, the pairing between the transmitting device and the receiving devices is completed;
If they do not match, return to step S02;
The step S04 is repeated until all receiving devices have been paired with the transmitting device. The receiving devices then enter the reception state and are ready to receive data transmitted by the transmitting device.

In some embodiments, the transmitting device and the receiving devices conduct wireless communication via UWB.

In some embodiments, the step of the first transmitting module 1 recording the first time required for completing the transmitting of all the test data packets includes:

Recording a transmitting time of first data in the test data packets to obtain a first timestamp;
Receiving an acknowledgment packet fed back by the Nth receiving device;
Determining a second timestamp according to the acknowledgment packet;
Performing a subtraction operation between the second timestamp and the first timestamp to obtain the first time.

In some embodiments, the calculation formula for the first time is as follows:

$$T_0 = T_{12} - T_{11}.$$

Wherein $T_0$ represents the first time, $T_{11}$ represents the first timestamp, and $T_{12}$ represents the second timestamp.

In some embodiments, the step of the first transmitting module 1 sequentially transmitting test data packets to N receiving devices includes:
The transmitting device switches to the transmission state and sequentially transmits the maximum data packets to the N receiving devices. After transmitting all maximum data packets to all receiving devices, the transmitting device switches to the reception state; it should be noted that the test data packets include a maximum data packet, which refer to a data length before compression and correspond to an actual length of the data played by the receiving devices.

After pairing with the transmitting device, the receiving devices enter the reception state. Upon receiving the maximum data packets, the receiving devices generate the acknowledgment packets and, after switching to the transmission state, transmit the acknowledgment packets to the transmitting device;
After receiving the acknowledgment packets from the N receiving devices, the transmitting device calculates the

total time $T_0$ (i.e., the first time) for transmitting data to the N receiving devices based on the acknowledgment packets.

In some embodiments, the steps of the first calculation module 2 obtaining the transmission cycle and the N delayed playback timestamps according to the data packet preparation time, the first time, and the predetermined error tolerance time include:

Obtaining the transmission cycle based on the first time and the predetermined error tolerance time;
Obtaining a first delayed playback timestamp based on the transmission cycle and the data packet preparation time;

Obtaining an Nth delayed playback timestamp based on the first time and the first delayed playback timestamp, wherein N is a positive integer greater than 1.

In some embodiments, the steps for the first calculation module 2 to obtain the transmission cycle, the first delayed playback timestamp, and the Nth delayed playback timestamp based on the first time and the predetermined error tolerance time include:

Performing an addition operation between the first time and the predetermined error tolerant time to obtain the transmission cycle;
Performing a subtraction operation between the transmission cycle and the data packet preparation time to obtain the first delayed playback timestamp;
When N is 2, performing a subtraction operation between the first time and the first delayed playback timestamp to obtain a second delayed playback timestamp;
When N is greater than 2, performing a subtraction operation between the first time and the (N-1)th delayed playback timestamp to obtain the Nth delayed playback timestamp.

In some embodiments, the calculation formula for the transmission cycle is as follows:

$$T_t = T_0 + T_{delay1}.$$

Wherein $T_t$ represents the transmission cycle, which also corresponds a standard transmission cycle matched between the transmitting device and the receiving devices. $T_0$ is the first time, and $T_{delay1}$ is the predetermined error tolerance time;

The calculation formula for the first delayed playback timestamp is as follows:

$$T_1 = T_t - T_{prepare.}$$

Wherein $T_1$ represents the first delayed playback time-

stamp, $T_t$ is the transmission cycle, and $T_{prepare}$ is the data packet preparation time, which is the delay time from when the receiving device receives the data packet to when it plays the data packet. It is also the delayed playback timestamp attached to the data packet and the reference time for playback synchronization detection;

The calculation formula for the Nth delayed playback timestamp is as follows:

When $N = 2$, $T_2 = T_0 - T_1$;
When $N > 2$, $T_n, = T_0 - T_{n-1}$.

Wherein, $T_1$ represents the first delayed playback timestamp, $T_2$ represents the second delayed playback timestamp, $T_n$ represents the Nth delayed playback timestamp, $T_{n-1}$ represents the (N-1)th delayed playback timestamp, and $T_0$ represents the first time;

In some embodiments, the first receiving device $RX_1$, the second receiving device $RX_2$, ..., the (N-1)th receiving device $RX_{n-1}$, and the Nth receiving device $RX_n$ sequentially use $T_1$, $T_2$, ..., $T_{n-1}$, and $T_n$ as their respective delayed playback timestamps, which serve as the time for delayed playback of data.

In some embodiments, the steps for the second transmission module 3 to transmit the audio data packets and corresponding delayed playback timestamps to N receiving devices according to the transmission cycle include:

The transmitting device sequentially transmits audio data packets and the corresponding delayed playback timestamps to the N receiving devices based on the transmission cycle as a standard data transmission period, specifically including
Transmitting audio data packets and $T_1$ to the first receiving device $RX_1$, transmitting audio data packets and $T_2$ to the second receiving device $RX_2$, ..., until transmitting audio data packets and $T_n$ to the Nth receiving device $RX_n$.

In some embodiments, the steps for the second calculation module 4 to obtain the time difference according to the Nth delayed playback timestamp and the existing data playback duration include:

Performing a subtraction operation between the Nth delayed playback timestamps and the existing data playback duration to obtain a difference value, and performing an absolute value operation on the difference value to obtain the time difference.

In some embodiments, the calculation formula for the second calculation module 4 to obtain the time difference is as follows:

$$T_d = |T_p - T_n|.$$

Wherein $T_p$ represents the existing data playback duration, that is, the playback time required for all audio data in the Nth receiving device (i.e., the Nth receiving device), $T_n$ represents the Nth delayed playback timestamp, $T_p$-$T_n$ represents a difference value between the existing data playback duration and Nth delayed playback timestamp, and $T_d$ represents the time difference.

In some embodiments, the step for the adjustment module 5 to adjust the predetermined error tolerance time to the target error tolerance time according to the comparison result between the time difference and the predetermined time difference threshold includes:

Comparing the time difference with the predetermined time difference threshold;
When the time difference is less than the predetermined time difference threshold, setting the target error tolerance time equal to the predetermined error tolerance time;

When the time difference is greater than or equal to the predetermined time difference threshold, adjusting a magnitude of the predetermined error tolerance time to the target error tolerance time.

In some embodiments, the steps for the adjustment module 5 to obtain the target error tolerance time are as follows:
When $T_d < T_s$, wherein $T_s$ represents the predetermined time difference threshold, no adjustment to the predetermined error tolerance time is needed, that is, the target error tolerance time $T_{delay2}$ is equal to the predetermined error tolerance time, $T_{delay2} = T_{delay1}$.

In some embodiments, the predetermined time difference threshold $T_s$ may be set to 2 ms.

In other embodiments, the steps for the adjustment module 5 to obtain the target error tolerance time are as follows:
When $T_d \geq T_s$, the predetermined error tolerance time needs to be adjusted. The magnitudes of the existing data playback duration and the Nth delayed playback timestamp are determined, with the specific steps as follows:

According to the above formulas:

$$T_n = T_0 - T_{n-1}$$

$$T_t = T_0 + T_{delay1}$$

$$T_1 = T_t - T_{prepare}$$

A relationship formula between the Nth delayed playback timestamp and the predetermined error tolerance time is obtained:

When N = 2, $T_2 = T_{prepare} - T_{delay1}$; or,

When N > 2, $T_n = T_t - T_{delay1}$

In summary, the value of $T_n$ is inversely proportional to the value of $T_{delay1}$.

When $T_p < T_n$, the predetermined error tolerance time $T_{delay1}$ is increased to obtain the target error tolerance time $T_{delay2}$. The predetermined error tolerance time is replaced with the target error tolerance time to reduce the size of $T_n$, such that the time difference between $T_n$ and $T_p$ is less than the predetermined time difference threshold $T_s$;
When $T_p > T_n$, the predetermined error tolerance time $T_{delay1}$ is decreased to obtain the target error tolerance time $T_{delay2}$. The predetermined error tolerance time is replaced with the target error tolerance time to increase the value of $T_n$, such that the time difference between $T_n$ and $T_p$ is less than the predetermined time difference threshold $T_s$.

Referring to FIG. 5, in some embodiments, the adjustment module 5 is further configured to update the Nth delayed playback timestamp when determining that the target error tolerance time is not equal to the predetermined error tolerance time. The adjustment module 5 is connected to the first calculation module 2. When the target error tolerance time is not equal to the predetermined error tolerance time, the predetermined error tolerance time is updated to obtain the target error tolerance time, and the target error tolerance time is substituted into the calculation program of the first calculation module 2 to obtain the updated delayed playback timestamp.

In some embodiments, the steps for the adjustment module 5 to update the delayed playback timestamp based on the target error tolerance time specifically include:

When the time difference of the receiving device is less than the predetermined time difference threshold, adjustment of its delayed playback timestamp of the receiving device is unnecessary;
When the time difference of the receiving device is greater than or equal to the predetermined time difference threshold, its delayed playback timestamp needs to be adjusted. The predetermined error tolerance time for that receiving device is adjusted to a target tolerance time, and the receiving device transmits the update information to the transmitting device, and the transmitting device updates the delayed playback timestamp of the receiving device according to the target error tolerance time, thereby improving the audio playback synchronization rate of multiple receiving devices.

The invention further provides a transceiver device for multi-channel data transmission, including a transmitting device and a receiving device. The transmitting device and the receiving device are connected for communication via wireless transmission, and the transmitting device or the receiving device includes a synchronization device.

In some embodiments, according to calculation requirements or device assembly requirements, the first transmitting module, the second transmitting module, the first calculation module, and the second calculation module are all disposed in the transmitting device, and the adjustment module is disposed in the receiving device.

In other embodiments, the first transmission module, the second transmission module, the first calculation module, the second calculation module, and the adjustment module are all arranged within the transmitting device.

The beneficial effects of the synchronization method, synchronization device, and transceiver device for multi-channel data transmission of the invention are as follows:

The synchronization method for multi-channel data transmission of the invention records the first time required for completing the transmitting of all test data packets. It obtains a transmission cycle and N delayed playback timestamps according to a data packet preparation time, the first time, and a predetermined error tolerance time. It transmits audio data packets and corresponding delayed playback timestamps to the N receiving devices based on the transmission cycle and the N. It obtains an existing data playback duration according to acknowledgment packets, and obtains a time difference according to the delayed playback timestamp and the existing data playback duration. The method adjusts the predetermined error tolerance time to a target error tolerance time based on a comparison result between the time difference and a predetermined time difference threshold.

The invention transmits test data to the N receiving devices, and calculates and obtains the transmission cycle and the N delayed playback timestamps based on the information fed back by the receiving devices, the data packet preparation time, the first time, and the predetermined error tolerance time. Then, audio data packets are transmitted to the N receiving devices, and the existing data playback duration and the time difference are calculated and obtained according to the acknowledgment packets fed back by the receiving devices. Finally, the predetermined error tolerance time is adjusted to the target error tolerance time according to a comparison between the time difference and the predetermined synchronization time difference threshold, and the predetermined error tolerance time is replaced with the target error tolerance time. In this way, the playback delay time of multi-channel wireless transmission audio data packets can be adjusted in real time and in a timely manner according to the actual data transmission condition. That is, the predetermined error tolerance time is adjusted to the target error tolerance time, thereby achieving audio synchronization of multi-channel wireless transmission.

The above detailed description of the synchronization method, the synchronization, and the transceiver device for multi-channel data transmission, and transceiver device is provided in the invention. Specific examples are used herein to illustrate the principles and implementation methods of the invention. The descriptions of the foregoing embodiments are only intended to facilitate understanding of the method and core ideas of the invention. Meanwhile, for those skilled in the art, changes may be made in the specific implementation methods and application scopes in accordance with the ideas of the invention. In summary, the content of this specification shall not be construed as a limitation on the invention.

**Claims**

1. A synchronization method for multi-channel data transmission, comprising:

   sequentially transmitting test data packets to N receiving devices, and recording a first time required for completing the transmitting of all the test data packets, wherein N is a positive integer greater than 1;
   obtaining a transmission cycle and N delayed playback timestamps based on a data packet preparation time, the first time, and a predetermined error tolerance time, wherein the N delayed playback timestamps are in one-to-one correspondence with the N receiving devices;
   respectively transmitting audio data packets and corresponding delayed playback timestamps to the N receiving devices according to the transmission cycle, and thereafter receiving acknowledgment packets fed back by the receiving devices;
   obtaining an existing data playback duration based on the acknowledgment packets, and obtaining a time difference based on the delayed playback timestamps and the existing data playback duration; and
   adjusting the predetermined error tolerance time to a target error tolerance time according to a comparison result between the time difference and a predetermined time difference threshold.

2. The synchronization method for multi-channel data transmission according to claim 1, wherein the step of recording the first time required for completing the transmitting of all the test data packets comprises:

   recording a transmitting time of first data in the test data packets to obtain a first timestamp;
   receiving a reception completion data packet fed back by the Nth receiving device;
   determining a second timestamp according to the reception completion data packets; and

performing a subtraction operation between the second timestamp and the first timestamp to obtain the first time.

3. The synchronization method for multi-channel data transmission according to claim 2, wherein the step of obtaining the data packet preparation time comprises:

obtaining a third timestamp when the receiving device starts receiving the data packet and a fourth timestamp when the receiving device starts playing the data packet based on the reception completion data packets; and
performing a subtraction operation between the fourth timestamp and the third timestamp to obtain the data packet preparation time.

4. The synchronization method for multi-channel data transmission according to claims 1 or 3, wherein the step of obtaining the transmission cycle and the N delayed playback timestamps based on the data packet preparation time, the first time, and the predetermined error tolerance time comprises:

obtaining the transmission cycle based on the first time and the predetermined error tolerance time;
obtaining a first delayed playback timestamp based on the transmission cycle and the data packet preparation time;
obtaining an Nth delayed playback timestamp based on the first time and the first delayed playback timestamp, wherein N is a positive integer greater than 1.

5. The synchronization method for multi-channel data transmission according to claim 4, wherein the step of obtaining the transmission cycle based on the first time and the predetermined error tolerance time comprises:
performing an addition operation between the first time and the predetermined error tolerant time to obtain the transmission cycle.

6. The synchronization method for multi-channel data transmission according to claim 5, wherein the step of obtaining the first delayed playback timestamp based on the transmission cycle and the data packet preparation time comprises:
performing a subtraction operation between the transmission cycle and the data packet preparation time to obtain the first delayed playback timestamp.

7. The synchronization method for multi-channel data transmission according to claim 6, wherein the step of obtaining the Nth delayed playback timestamp based on the first time and the first delayed playback timestamp comprises:

when N is 2, performing a subtraction operation between the first time and the first delayed playback timestamp to obtain a second delayed playback timestamp; and
when N is greater than 2, performing a subtraction operation between the first time and the (N-1)th delayed playback timestamp to obtain the Nth delayed playback timestamp.

8. The synchronization method for multi-channel data transmission according to claim 1, wherein the step of obtaining the time difference based on the delayed playback timestamps and the existing data playback duration comprises:

performing a subtraction operation between the delayed playback timestamp and the existing data playback duration to obtain a difference value, and
performing an absolute value operation on the difference value to obtain the time difference.

9. The synchronization method for multi-channel data transmission according to claim 8, wherein the step of adjusting the predetermined error tolerance time to the target error tolerance time according to the comparison result between the time difference and the predetermined time difference threshold comprises:

comparing the time difference with the predetermined time difference threshold;
when the time difference is less than the predetermined time difference threshold, setting the target error tolerance time equal to the predetermined error tolerance time; and
when the time difference is greater than or equal to the predetermined time difference threshold, adjusting a magnitude of the predetermined error tolerance time to the target error tolerance time.

10. A synchronization device for multi-channel data transmission, comprising:

a first transmitting module, configured to sequentially transmit test data packets to N receiving devices and recording the first time required for completing the transmitting of all the test data packets, wherein N is a positive integer greater than 1;
a first calculation module, configured to obtain the transmission cycle and N delayed playback timestamps according to the data packet preparation time, the first time, and the predetermined error tolerance time; wherein the N delayed playback timestamps correspond to the N receiving devices one-to-one;

a second transmitting module, configured to respectively transmit audio data packets and the corresponding delayed playback timestamps to the N receiving devices according to the transmission cycle, and thereafter receive acknowledgment packets fed back by the receiving devices;

a second calculation module, configured to obtain an existing data playback duration based on the acknowledgment packets, and obtain a time difference based on the delayed playback timestamps and the existing data playback duration; and

an adjustment module, configured to adjust the predetermined error tolerance time to a target error tolerance time according to a comparison result between the time difference and a predetermined time difference threshold.

11. The synchronization device for multi-channel data transmission according to claim 10, wherein to obtain the transmission cycle and N delayed playback timestamps according to the data packet preparation time, the first time, and the predetermined error tolerance time comprises:

   obtaining the transmission cycle based on the first time and the predetermined error tolerance time;

   obtaining a first delayed playback timestamp based on the transmission cycle and the data packet preparation time;

   obtaining an Nth delayed playback timestamp based on the first time and the first delayed playback timestamp, wherein N is a positive integer greater than 1.

12. A transceiver device for multi-channel data transmission, comprising:

   a transmitting device; and
   a receiving device;
   wherein one of the transmitting device and receiving device comprising a synchronization device for multi-channel data transmission according to any one claims 10-11.

Sequentially transmitting test data packets to N receiving devices, and recording a first time required for completing the transmitting of all the test data packets, wherein N is a positive integer greater than 1 ⟋ S1

Obtaining a transmission cycle and N delayed playback timestamps based on a data packet preparation time, the first time, and a predetermined error tolerance time, wherein the N delayed playback timestamps are in one-to-one correspondence with the N receiving devices ⟋ S2

Respectively transmitting audio data packets and the corresponding delayed playback timestamps to the N receiving devices according to the transmission cycle, and thereafter receiving acknowledgment packets fed back by the receiving devices ⟋ S3

Obtaining an existing data playback duration based on the acknowledgment packets, and obtaining a time difference based on the delayed playback timestamps and the existing data playback duration ⟋ S4

Adjusting the predetermined error tolerance time to a target tolerance time according to a comparison result between the time difference and a predetermined time difference threshold ⟋ S5

FIG. 1

Establishing a wireless communication connection with the receiving devices, and preset a predetermined error tolerance time and a predetermined time difference threshold ⟶ S0

Sequentially transmitting test data packets to N receiving devices, and recording a first time required for completing the transmitting of all the test data packets, wherein N is a positive integer greater than 1 ⟶ S1

Obtaining a transmission cycle and N delayed playback timestamps based on a data packet preparation time, the first time, and a predetermined error tolerance time, wherein the N delayed playback timestamps are in one-to-one correspondence with the N receiving devices ⟶ S2

Respectively transmitting audio data packets and the corresponding delayed playback timestamps to the N receiving devices according to the transmission cycle, and thereafter receiving acknowledgment packets fed back by the receiving devices ⟶ S3

Obtaining an existing data playback duration based on the acknowledgment packets, and obtaining a time difference based on the delayed playback timestamps and the existing data playback duration ⟶ S4

Adjusting the predetermined error tolerance time to a target tolerance time according to a comparison result between the time difference and a predetermined time difference threshold ⟶ S5

FIG. 2

Obtaining the transmission cycle based on the first time and the predetermined error tolerance time ⟋S21

Obtaining a first delayed playback timestamp based on the transmission cycle and the data packet preparation time ⟋S22

Obtaining an Nth delayed playback timestamp based on the first time and the first delayed playback timestamp,wherein N is a positive integer greater than 1 ⟋S23

FIG. 3

Sequentially transmitting test data packets to N receiving devices, and recording a first time required for completing the transmitting of all the test data packets, wherein N is a positive integer greater than 1 — S1

Obtaining a transmission cycle and N delayed playback timestamps based on a data packet preparation time, the first time, and a predetermined error tolerance time, wherein the N delayed playback timestamps are in one-to-one correspondence with the N receiving devices — S2

Respectively transmitting audio data packets and corresponding delayed playback timestamps to the N receiving devices according to the transmission cycle, and thereafter receiving acknowledgment packets fed back by the receiving devices — S3

Obtaining an existing data playback duration based on the acknowledgment packets, and obtaining a time difference based on the delayed playback timestamps and the existing data playback duration — S4

Adjusting the predetermined error tolerance time to a target error tolerance time according to a comparison result between the time difference and a predetermined time difference threshold — S5

When the target tolerance time is not equal to the predetermined error tolerance time, the delayed playback timestamp is updated based on the target error tolerance time — S6

FIG. 4

FIG. 5

## INTERNATIONAL SEARCH REPORT

| International application No. |
|---|
| **PCT/CN2023/122310** |

| A. | CLASSIFICATION OF SUBJECT MATTER |
|---|---|

H04J3/06(2006.01)i

According to International Patent Classification (IPC) or to both national classification and IPC

| B. | FIELDS SEARCHED |
|---|---|

Minimum documentation searched (classification system followed by classification symbols)

IPC: H04W H04J

Documentation searched other than minimum documentation to the extent that such documents are included in the fields searched

Electronic data base consulted during the international search (name of data base and, where practicable, search terms used)

CNTXT, WPABS, ENTXT, ENTXTC, DWPI, VEN, 3GPP, CJFD: 同步, 测试, 容错, 时间, 周期, 延时, 时差, 播放, 阈值, synchronization, multi-channel, test, time, fault-tolerant, period, delay, difference, threshold, play

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111147907 A (UBTECH ROBOTICS CORP.) 12 May 2020 (2020-05-12) description, paragraphs [0064]-[0145], and claims 1-10 | 1-12 |
| A | CN 106411447 A (GUANGDONG OPPO MOBILE TELECOMMUNICATIONS CO., LTD.) 15 February 2017 (2017-02-15) entire document | 1-12 |
| A | CN 106452643 A (GUANGDONG OPPO MOBILE TELECOMMUNICATIONS CO., LTD.) 22 February 2017 (2017-02-22) entire document | 1-12 |
| A | CN 107809685 A (CBC CLOUD TECHNOLOGY CO., LTD.) 16 March 2018 (2018-03-16) entire document | 1-12 |
| A | WO 2023273601 A1 (GUANGDONG OPPO MOBILE TELECOMMUNICATIONS CORP., LTD.) 05 January 2023 (2023-01-05) entire document | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **03 June 2024** | **06 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122310**

| Patent document cited in search report | | | Publication date (day/month/year) | Patent family member(s) | | | Publication date (day/month/year) |
|---|---|---|---|---|---|---|---|
| CN | 111147907 | A | 12 May 2020 | None | | | |
| CN | 106411447 | A | 15 February 2017 | None | | | |
| CN | 106452643 | A | 22 February 2017 | None | | | |
| CN | 107809685 | A | 16 March 2018 | None | | | |
| WO | 2023273601 | A1 | 05 January 2023 | CN | 115551066 | A | 30 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023122310 W

- CN 2023112054961